# EUROPEAN PATENT SPECIFICATION

(11) **EP 3 785 524 B1**
(45) Date of publication and mention of the grant of the patent: **07.06.2023**
(21) Application number: 19773203.5
(22) Date of filing: 24.04.2019
(51) Int. Cl.: A01G 23/08, A01G 23/089

(54) **TREE GRIPPING, CUTTING AND ROTATING DEVICE**
VORRICHTUNG ZUM GREIFEN, SCHNEIDEN UND DREHEN VON BÄUMEN
DISPOSITIF DE SAISIE, DE COUPE ET DE ROTATION D'ARBRES

(30) Priority: 25.04.2018 PT 2018110709
(43) Date of publication of application: 03.03.2021
(73) Proprietor: Fravizel - Equipamentos Metalomecânicos Lda., 2025-999 Alcanede (PT)
(72) Inventor: FRAZÃO, Eliseu, 2025-999 Alcanede (PT)
(74) Representative: Pereira da Cruz, Joao
(86) International application number: PCT/PT2019/050006
(87) International publication number: WO 2019/209128

(56) References cited:
- EP-A1- 2 106 692
- WO-A1-2013/176612
- CA-A- 1 005 735
- FR-A1- 2 397 787
- FR-A1- 3 012 010
- US-A- 5 113 919

## Description

### BRIEF INTRODUCTION TO THE INVENTION

The device for grasping, felling and rotating trees, described in the present invention refers to a felling machine adapted to forestry machines with the aim of grasping, felling and rotating the felled trees and placing them on the ground.

### STATE OF THE ART

Patent application N°. CA2919723 describes a diskcutting device. This system has the drawback of projecting materials.

Patent application N°. US3516462 refers to tree-cutting equipment, which comprises 2 gripping arms 64, 66 and 2 fixed cutting blade supports 62, 63, both 4 components are fastened by means of a tube 44, which implies grasping the trunk of the tree with slight firmness and, also due to the already cited 4 components being fastened to a tube 44, they cannot rotate in consonance with each direction, namely horizontal and vertical, pivotably clockwise or anti-clockwise, for adjusting the grip of the trunk of the tree.

In patent application N°. US3516462 the grasp adjustment of the trunk of the tree has to be carried out by the inner and outer lance arms 18, 19 and/or by means of vehicle manoeuvres that supports the entire tree-felling equipment described in this patent application, and this adjustment is due to the scarcity of the technical characteristics, being carried out slowly and with little precision.

Patent application N°. US3516462 does not describe the technical characteristics described and claimed in the present invention as is the case, among others, of a horizontal rotation mechanism, a vertical rotation mechanism, which respectively simultaneously turn a top mechanism for grasping the trees and a base mechanism for felling the trees, in which these previously cited 2 mechanisms turn freely, horizontally and vertically and clockwise or anti-clockwise, for adjusting the grip on the trunk of the tree', specifically for adjusting the top mechanism for grasping the trees and the base mechanism for cutting the trees.

Patent application N°. US3707175 describes a method and tree-felling equipment which comprises a complex functioning means that includes countless components as is the case, among others, of rollers 34, cam 134 and rotating decks 106.

Patent application N°.US3707175 does not describe the technical characteristics described and claimed in the present invention as is the case, among others, of a horizontal rotation mechanism, a vertical rotation mechanism, which respectively simultaneously turn a base mechanism for cutting the trees and a top mechanism for grasping the trees, which includes a central upper horizontal fork for buttressing and supporting the trees, which includes a "U"-like shape. Further relevant prior art is FR 2 397 787 A1.

The state of the art does not comprise any device having all the technical characteristics claimed in the present invention, as is the case, among others, of the detachable horizontal rotation mechanism and the vertical rotation mechanism, which respectively simultaneously rotate a top mechanism for grasping the trees and a base mechanism for felling the trees.

The present disclosure also presents another technical characteristic that refers to the sharp angle formed by the edge of each of the left and right cutting blades, and which is not known in the state of the art either.

The functionalities described and characterised in the present disclosure which refer to pivotably turning in consonance with the directions, namely horizontal and vertical, clockwise or anti-clockwise, to adjust the grip of the trunk of the tree, respectively embodied by way of a horizontal rotation mechanism, a vertical rotation mechanism, will present an unexpected technical effect over the inventions within the state of the art due to the fact that the present device for grasping, felling and rotating trees and which is coupled and fastened to a machine, adapts better to the morphology of the terrain and to the intrinsic characteristics of the tree, enabling a suitable alignment between the 3 players, i.e., machine-accessory-tree. The invention is defined by the appended claims.

### BRIEF DESCRIPTION OF THE DRAWINGS

The following description is made with reference to the accompanying drawings which are presented merely as reference, not having a limitative character, and wherein:
Figure 1 - Overview of the device for grasping, felling and rotating trees;
Figure 2 - Top view of the device for grasping, felling and rotating trees;
Figure 3 - Detailed view of part of the device for grasping, felling and rotating trees;
Figure 4 - Front view of the device for grasping, felling and rotating trees;
Figure 5 - View of the device for grasping, felling and rotating trees coupled to a machine;

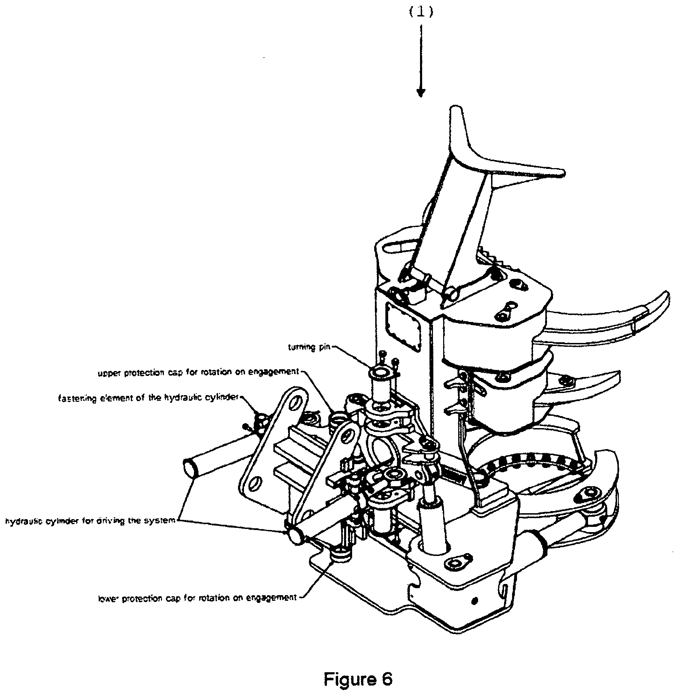

Figure 6 - View of the horizontal rotation mechanism (11) and of the remaining components of the device for grasping, felling and rotating trees coupled to a machine;

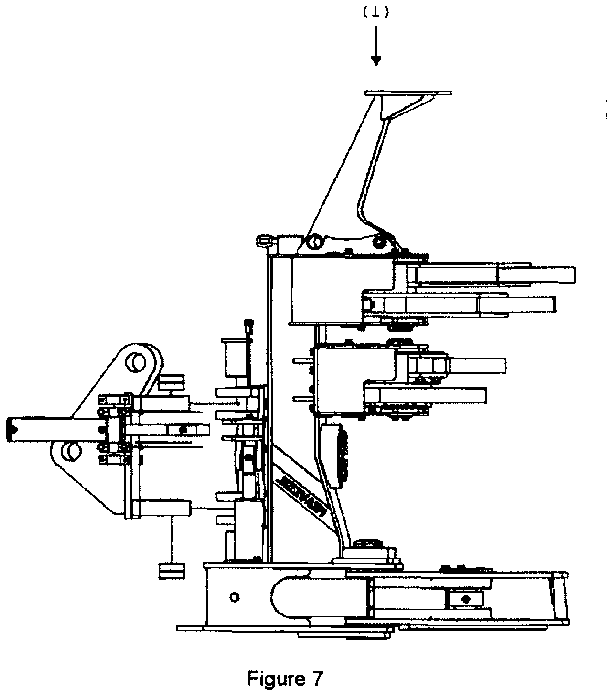

Figure 7 - Side view of the uncoupled horizontal rotation mechanism (11) and of the remaining components of the device for grasping, felling and rotating trees coupled to a machine;

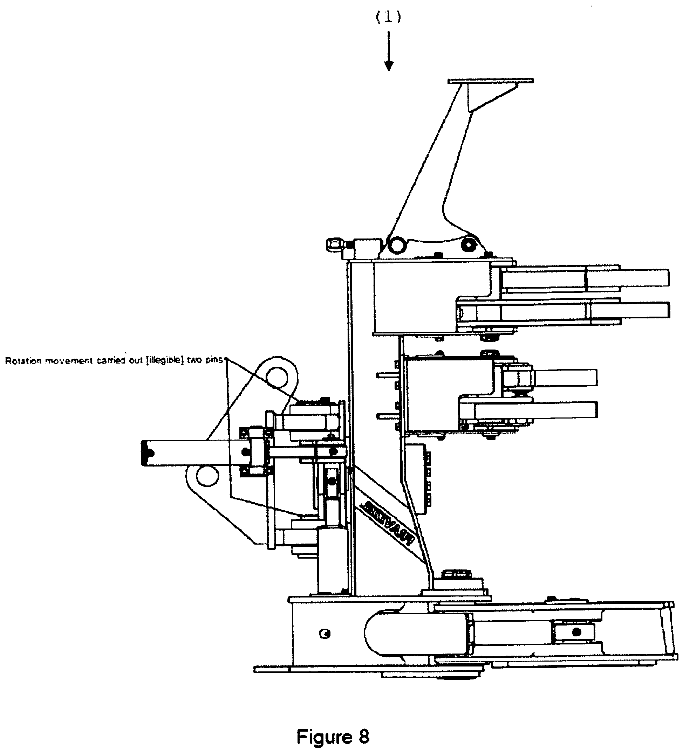

Figure 8 - Side view of the horizontal rotation mechanism (11) coupled and fastened and of the remaining components of the device for grasping, felling and rotating trees coupled to a machine;
Figure 9 - Side view of the horizontal rotation mechanism (11) at its maximum rotation to the left;

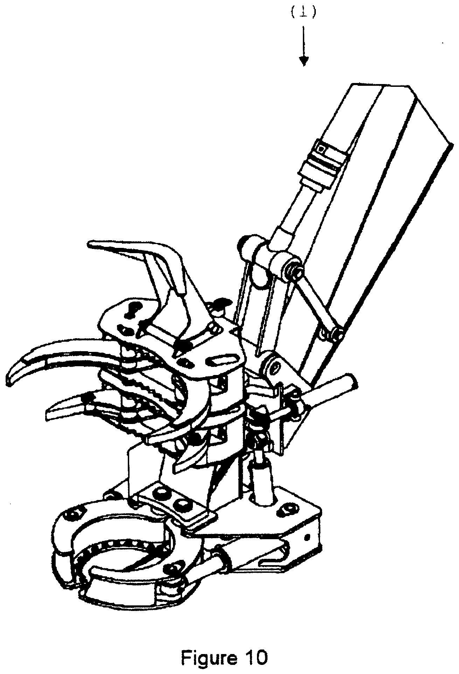

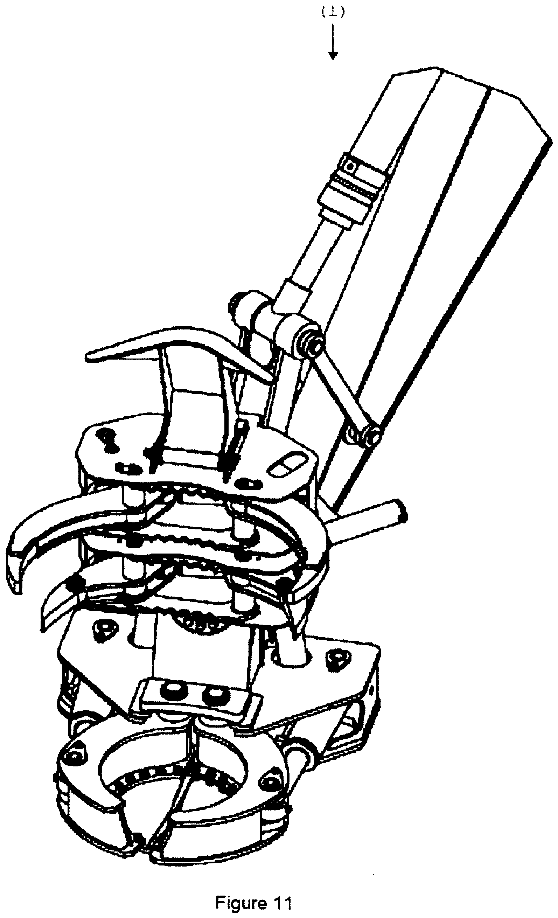

Figure 10 - Side view of the horizontal rotation mechanism (11) at its central position; and

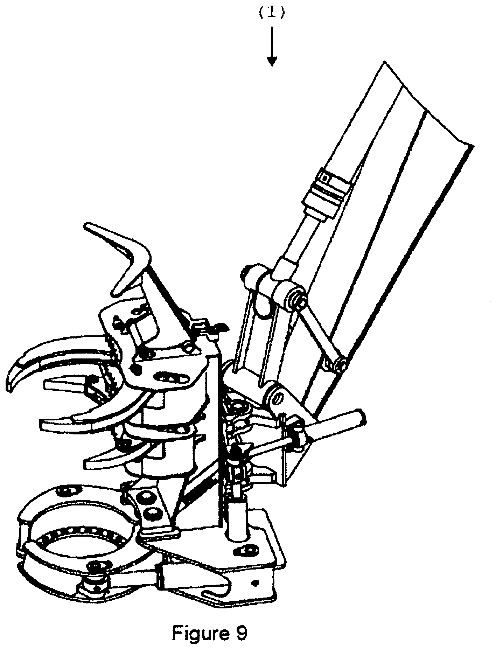

Figure 9 - Side view of the horizontal rotation mechanism (11) at its maximum rotation to the right.

### Key to the reference numbers

- equipment for grasping, felling and rotating trees (1);
- a horizontal rotation mechanism (11):
- a vertical rotation mechanism (12);
- a top mechanism for grasping the trees (13); and
- a lower base mechanism for cutting the trees (14);
- a left cutting arm (2);
- a right cutting arm (3);
- an upper left cutting blade (4);
- a lower right cutting blade (5);
- two driving cylinders (6);
- two pins (7);
- two forward pins (8);
- two rearward pins (9);
- a set of fastening screws (10);
- a central top fork for buttressing (15);
- a top arm for left and upper grasping (16);
- a top arm for right and lower grasping (17);
- an intermediary arm for left and upper grasping (18);
- an intermediary arm for right and lower grasping (19);
- a horizontal articulation pin/roller (20);
- two horizontal drive cylinders (21);
- a vertical articulation pin/roller (22);
- two vertical drive cylinders (23);
- trees (24);
- machine (25); and
- horizontal structure (26).

### DETAILED DESCRIPTION OF THE INVENTION

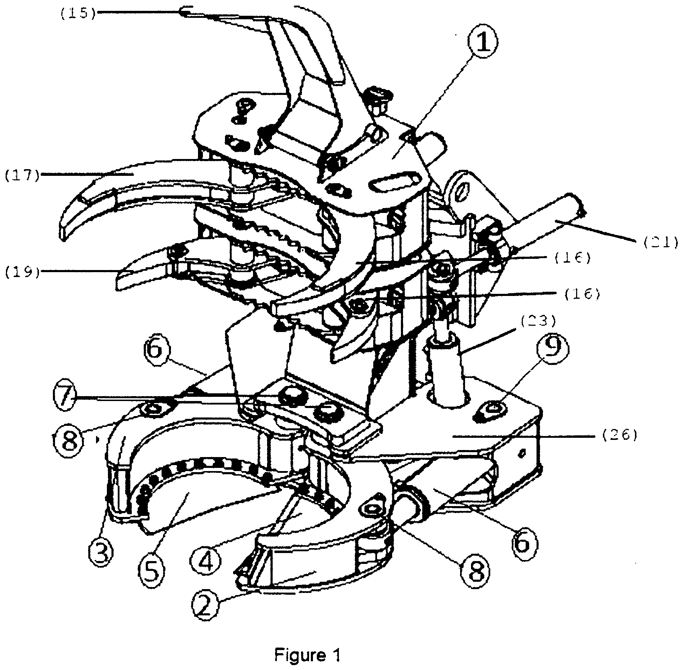

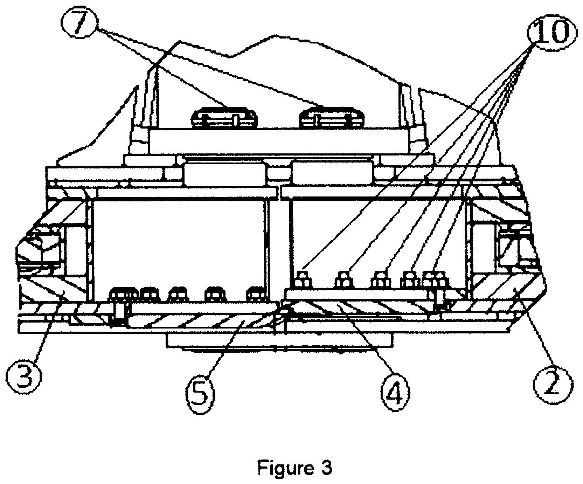

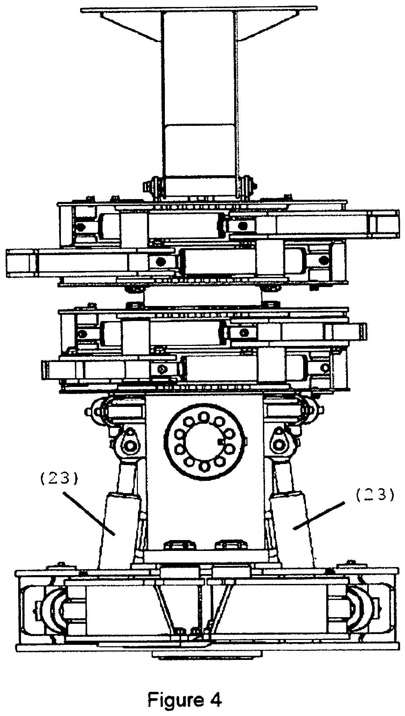

The present invention, represented in figures 1 to 5, refers to a device for grasping, felling and rotating trees (1) normally applied to forestry machines which enables the tree to be extracted in a single cut.

This said device for grasping, felling and rotating trees can be coupled to any type of machine, and is thus perfectly autonomous and adaptable.

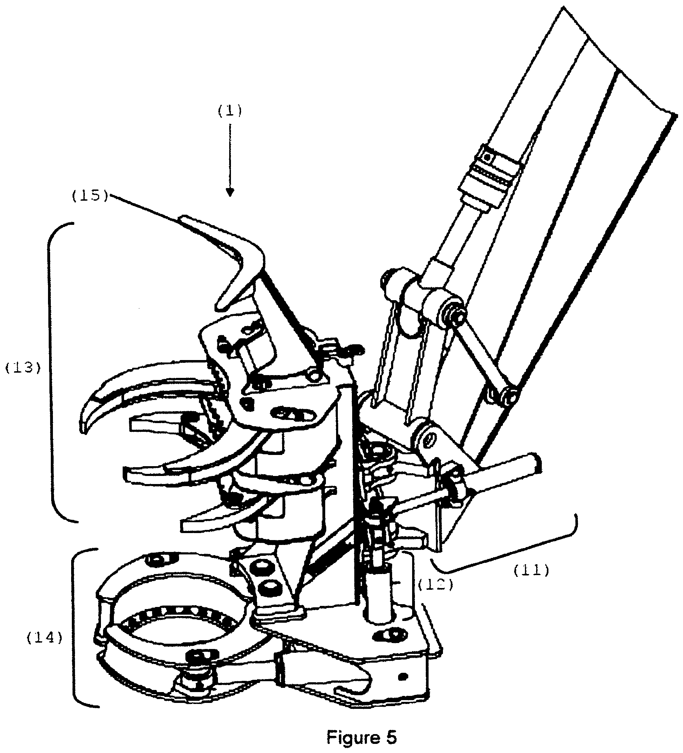

As can be seen in figures 1 and 5, the present invention refers to a device for grasping, felling and rotating (1) and which is coupled and fastened to a machine which comprises 4 mechanisms respectively integrated together.

Said 4 mechanism, represented in figure 5 consists of:
- a horizontal rotation mechanism (11) and a vertical rotation mechanism (12), which respectively turn simultaneously;
- a top mechanism for grasping the trees (13); and
- a base mechanism for felling the trees (14).

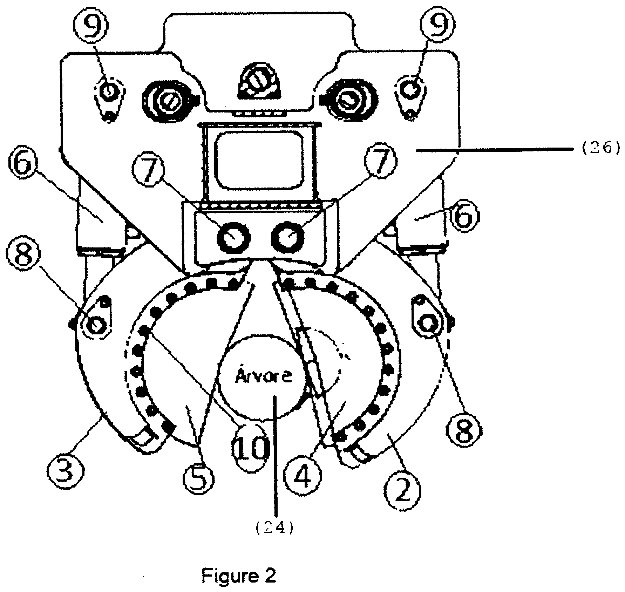

The base mechanism for felling trees (14), represented in figure 1 and 2, comprises:
- a left cutting arm (2) and a right cutting arm (3), which respectively fasten;
- an upper left cutting blade (4) and a lower right cutting blade (5);
- two driving cylinders (6), respectively of the left cutting arm (2) and of the right cutting arm (3);
- two pins (7) that are vertical and parallel in relation to each other;
- two forward pins (8);
- two rearward pins (9); and
- a set of fastening screws (10).

Figure 2 represents an upper left cutting blade (4) being horizontal and whose cutting edge comprises:
- two consecutive cutting blades, which present;
- a "v"-like shape; and
- describe together a sharp angle varying between 140° and 172°.

Figure 2 represents a lower right cutting blade (5) being horizontal and whose cutting edge comprises:
- two consecutive cutting blades, which present;
- a "v"-like shape; and
- describe together a sharp angle varying between 140° and 172°.

Said "v"-like shape will enable the grasp, immobilisation and enhanced performance of felling trees (24) by means of the upper left cutting blade (4) and the lower right cutting blade (5).

The horizontal rotation mechanism (11) is coupled and fastened to the horizontal rotation mechanism (11), meaning the horizontal rotation mechanism (11) is part of the device for grasping, felling and rotating trees (1) described in the present disclosure.

## Claims

1. A device for grasping, felling and rotating trees (1) for coupling and fastening to a machine, wherein the device is comprising four mechanisms fastened together, wherein the mechanisms are comprising a horizontal rotating mechanism (11), a vertical rotating mechanism (12), a top mechanism for grasping trees (13) and a base mechanism for felling trees (14) wherein
a. said horizontal rotating mechanism (11) being rotatable around a vertical articulation pin/roller (20) and driven by two horizontal drive cylinders (21), and simultaneously turning the top mechanism for grasping the trees (13) and the base mechanism for felling trees (14) into a horizontal plane and a clockwise and anti-clockwise direction;
b. said vertical rotating mechanism (12), being rotatable around a horizontal articulation pin/roller (22) and driven by two vertical drive cylinders (23), and simultaneously turning the top mechanism for grasping the trees (13) and the base mechanism for felling trees (14) into a vertical plane and a clockwise and anti-clockwise direction;
c. said top mechanism for grasping trees (13) comprising:
i) a central upper horizontal fork for buttressing (15) and supporting the trees, including a "U"- like shape;
ii) a top arm for left and upper grasping (16), a top arm for right and lower grasping (17), an intermediary arm for left and upper grasping (18) and an intermediary arm for right and lower grasping (19);
d. said base mechanism for felling trees (14) comprising:
i) a left cutting arm (2) and a right cutting arm (3), respectively fasten, each said left arm (2) and right arm (3) pivotable by two pins (7), said pins (7) vertical and parallel in relation to each other;
ii) both said left arm (2) and right arm (3) respectively comprising an upper left cutting blade (4) and a lower right cutting blade (5) each cutting blade (4)(5) pivotable by the two pins (7), cross over each other overlappingly with the upper left cutting blade (4) on the position above the lower right cutting blade (5);
iii) two driving cylinders (6) fastened by each of respective two forward pins (8) and two rearward pins (9), respectively and simultaneously connected to the left cutting arm (2) and to the right cutting arm (3) and to a horizontal structure (26) by the pin (8) of a left cylinder and by the pin (9) of a right cylinder; and
wherein the horizontal structure (26) being fastened to the top mechanism for grasping the trees (13) and the vertical rotation mechanism (12).

2. Device according to the previous claim wherein both upper left cutting blade (4) and lower right cutting blade (5) are horizontal and their both cutting edges comprises two consecutive cutting blades, which present a "v"-like shape and describe together a sharp angle varying between 140 º and 172º.

3. Device according to any of the previous claims wherein the respective edges of the upper left cutting blade (4) and of the lower right cutting blade (5) have opposite chamfers.

4. Device according to the previous claims, wherein the upper left cutting blade (4) and the lower right cutting blade (5) are respectively fastened at the base of the left cutting arm (2) and at the base of the right cutting arm (3) by means of a set of fastening screws (10) .

## Patentansprüche

1. Vorrichtung zum Greifen, Fällen und Drehen von Bäumen (1) zum Koppeln und Befestigen an einer Maschine, wobei die Vorrichtung vier aneinander befestigte Mechanismen umfasst, wobei die Mechanismen einen horizontalen Drehmechanismus (11), einen vertikalen Drehmechanismus (12), einen oberen Mechanismus zum Greifen von Bäumen (13) und einen unteren Mechanismus zum Fällen von Bäumen (14) umfassen, wobei
a. der horizontale Drehmechanismus (11) um einen vertikalen Gelenkbolzen/eine vertikale Gelenkrolle (20) drehbar ist und von zwei horizontalen Antriebszylindern (21) angetrieben wird und gleichzeitig den oberen Mechanismus zum Greifen von Bäume (13) und den unteren Mechanismus zum Fällen von Bäume (14) in eine horizontale Ebene sowie im und gegen den Uhrzeigersinn dreht;
b. der vertikale Drehmechanismus (12) um einen horizontalen Gelenkbolzen/eine horizontale Gelenkrolle (22) drehbar ist und von zwei vertikalen Antriebszylindern (23) angetrieben wird und gleichzeitig den oberen Mechanismus zum Greifen von Bäume (13) und den unteren Mechanismus zum Fällen von Bäume (14) in einer vertikalen Ebene und im und gegen den Uhrzeigersinn dreht;
c. der obere Mechanismus zum Greifen von Bäumen (13) umfasst:
i) eine zentrale obere waagerechte Gabel zur Strebepfeiler (15) und zum Abstützen der Bäume, einschließlich einer "U"-ähnlichen Form;
ii) einen oberen Arm zum Greifen nach links und oben (16), einen oberen Arm zum Greifen nach rechts und unten (17), einen Zwischenarm zum Greifen nach links und oben (18) und einen Zwischenarm zum Greifen nach rechts und unten (19) ;
d. der unteren Mechanismus zum Fällen von Bäumen (14) umfasst:
i) einen linken Schneidarm (2) und einen rechten Schneidarm (3), die jeweils befestigt sind, wobei der linke Arm (2) und der rechte Arm (3) durch zwei Stifte (7) schwenkbar sind, wobei die Stifte (7) vertikal und parallel zueinander verlaufen;
ii) sowohl der linke Arm (2) als auch der rechte Arm (3) jeweils eine obere linke Schneidklinge (4) und eine untere rechte Schneidklinge (5) aufweisen, wobei jede Schneidklinge (4)(5) durch die beiden Stifte (7) schwenkbar ist und sich überlappend mit der oberen linken Schneidklinge (4) in der Position über der unteren rechten Schneidklinge (5) überkreuzt;
iii) zwei Antriebszylinder (6), die durch jeweils zwei vordere Stifte (8) und zwei hintere Stifte (9) befestigt und gleichzeitig durch den Stift (8) eines linken Zylinders und durch den Stift (9) eines rechten Zylinders mit dem linken Schneidarm (2) und dem rechten Schneidarm (3) sowie mit einer horizontalen Struktur (26) verbunden sind; und
wobei die horizontale Struktur (26) an dem oberen Mechanismus zum Greifen von Bäumen (13) und dem vertikalen Drehmechanismus (12) befestigt ist.

2. Vorrichtung nach dem vorhergehenden Anspruch, wobei sowohl die obere linke Schneidklinge (4) als auch die untere rechte Schneidklinge (5) horizontal sind und ihre beiden Schneidkanten zwei aufeinanderfolgende Schneidklingen umfassen, die eine "V"-ähnliche Form aufweisen und zusammen einen scharfen Winkel begrenzen, der zwischen 140° und 172° variiert.

3. Vorrichtung nach einem der vorhergehenden Ansprüche, wobei die jeweiligen Kanten des oberen linken Schneidklinge (4) und des unteren rechten Schneidklinge (5) entgegengesetzte Fasen aufweisen.

4. Vorrichtung nach den vorhergehenden Ansprüchen, wobei das obere linke Schneidklinge (4) und das untere rechte Schneidklinge (5) jeweils an der Basis des linken Schneidarms (2) und an der Basis des rechten Schneidarms (3) mittels eines Satzes von Befestigungsschrauben (10) befestigt sind.

## Revendications

1. Dispositif de saisie, de coupe et de rotation d'arbres (1) pour accouplement et fixation à une machine, le dispositif comprenant quatre mécanismes fixés entre eux, où les mécanismes sont un mécanisme de rotation horizontale (11), un mécanisme de rotation verticale (12), un mécanisme supérieur pour la saisie d'arbres (13) et un mécanisme de base pour la coupe d'arbres (14), dans lequel
a. ledit mécanisme de rotation horizontale (11) tourne autour d'une cheville/d'un roulement d'articulation verticale (20) et est entraîné par deux cylindres d'entraînement horizontal (21), et fait tourner simultanément le mécanisme supérieur pour la saisie d'arbres (13) et le mécanisme de base pour la coupe d'arbres (14) dans un plan horizontal et dans le sens des aiguilles d'une montre et dans le sens inverse des aiguilles d'une montre ;
b. ledit mécanisme de rotation verticale (12) tourne autour d'une cheville/d'un roulement d'articulation horizontale (22) et est entraîné par deux cylindres d'entraînement vertical (23), et fait tourner simultanément le mécanisme supérieur pour la saisie d'arbres (13) et le mécanisme de base pour la coupe d'arbres (14) dans un plan vertical et dans le sens des aiguilles d'une montre ou dans le sens inverse des aiguilles d'une montre ;
c. ledit mécanisme supérieur pour la saisie d'arbres (13) comprend :
i) une fourche horizontale supérieure centrale pour étayer (15) et soutenir les arbres, qui inclut une forme en U ;
ii) un bras supérieur pour saisir la gauche et la partie supérieure (16), un bras supérieur pour saisir la droite et la partie inférieure (17), un bras intermédiaire pour saisir la gauche et la partie supérieure (18) et un bras intermédiaire pour saisir la droite et la partie inférieure (19) ;
d. ledit mécanisme de base pour la coupe d'arbres (14) comprend :
i) un bras de coupe gauche (2) et un bras de coupe droit (3), fixés respectivement, ledit bras gauche (2) et ledit bras droit (3) étant pivotants à l'aide de deux chevilles (7), lesdites chevilles (7) étant verticales et sont parallèles entre elles ;
ii) ledit bras gauche (2) et ledit bras droit (3) comportant respectivement une lame de coupe gauche supérieure (4) et une lame de coupe droite inférieure (5), chaque lame de coupe (4)(5) étant pivotante à l'aide des deux chevilles (7) et se croisant l'une sur l'autre de façon superposée, la lame de coupe gauche supérieure (4) se positionnant au-dessus de la lame de coupe droite inférieure (5) ;
iii) deux cylindres d'entraînement (6) fixés par chacune de deux chevilles antérieures (8) et deux chevilles postérieures (9) respectives, et connectés respectivement et simultanément au bras de coupe gauche (2) et au bras de coupe droit (3) et à une structure horizontale (26) au moyen de la cheville (8) d'un cylindre gauche et au moyen de la cheville (9) d'un cylindre droit ; et
dans lequel la structure horizontale (26) est fixée au mécanisme supérieure pour la saisie des arbres (13) et au mécanisme de rotation verticale (12).

2. Dispositif selon la revendication précédente où la lame de coupe gauche supérieure (4) et la lame de coupe droite inférieure (5) sont horizontales et dont le bord coupant de chacune comprend deux lames de coupe consécutives, qui présentent une forme de V et décrivent entre elles un angle aigu variant entre 140° et 172°.

3. Dispositif selon l'une quelconque des revendications précédentes où les bords respectifs de la lame de coupe gauche supérieure (4) et de la lame de coupe droite inférieure (5) ont des chanfreins opposés.

4. Dispositif selon les revendications précédentes où la lame de coupe gauche supérieure (4) et la lame de coupe droite inférieure (5) sont fixées respectivement à la base du bras de coupe gauche (2) et à la base du bras de coupe droit (3) au moyen d'un jeu de vis de fixation (10).
